# EUROPÄISCHE PATENTSCHRIFT

(11) **EP 2 316 635 B1**
(45) Veröffentlichungstag und Bekanntmachung des Hinweises auf die Patenterteilung: **25.04.2012**
(21) Anmeldenummer: 09013520.3
(22) Anmeldetag: 27.10.2009
(51) Int. Cl.: B29C 53/60, B29C 53/80, B29C 31/00

(54) **Ziehvorrichtung zum Ziehen eines Wickeldornes aus einem auf dem Wickeldorn aufgewickelten Wickelprodukt**
Pulling device for pulling a winding mandrel out of a coiled product coiled up on the winding mandrel
Dispositif de traction pour la traction d'un mandrin d'enroulement à partir d'un produit d'enroulement enroulé sur un mandrin d'enroulement

(43) Veröffentlichungstag der Anmeldung: 04.05.2011
(73) Patentinhaber: EHA Spezialmaschinenbau GmbH, 35239 Steffenberg (DE)
(72) Erfinder: Neubert, Mike, Dipl. Ing., 35232 Dautphetal (DE)
(74) Vertreter: Rohmann, Michael

(56) Entgegenhaltungen:
- EP-A1- 0 595 475
- DE-A1- 4 032 273
- US-A- 3 061 914

## Beschreibung

Die Erfindung betrifft eine Ziehvorrichtung zum Ziehen eines Wickeldornes aus einem auf dem Wickeldorn aufgewickelten Wickelprodukt. - Bei dem Wickelprodukt handelt es sich insbesondere um auf dem Wickeldorn aufgewickelte Fäden bzw. Faserstränge und insbesondere um mit Harz bzw. Kunstharz imprägnierte aufgewickelte Fäden bzw. Faserstränge. Das Wickelprodukt wird normalerweise formschlüssig auf der Außenoberfläche des Wickeldornes aufgewickelt. Der Wickeldorn ist insbesondere zylinderförmig oder konisch ausgebildet.

Aus DE 40 32 273 A1 ist ein Verfahren und eine Vorrichtung zum Herstellen rohrförmiger Wickelprodukte aus faserverstärkten Kunststoffen bekannt. Hier wird zunächst bandförmiges Material auf einen ersten Wickeldorn aufgewickelt und nach Fertigstellung des ersten Wickelproduktes ohne Unterbrechung des Wickelzuges wird zum Wickeln eines zweiten Wickelkörpers auf einen koaxial zum ersten Wickeldorn angeordneten zweiten Wickeldorn übergegangen. Nach Fertigstellung eines Wickelproduktes wird dieses von dem betreffenden Wickeldorn abgezogen und der Wickeldorn gereinigt, während gleichzeitig auf den jeweils anderen Wickeldorn ein weiteres Wickelprodukt gefertigt wird.

Ziehvorrichtungen der eingangs genannten Art sind im Übrigen aus der Praxis grundsätzlich in verschiedenen Ausführungsformen bekannt. Diese bekannten Ziehvorrichtungen weisen jedoch Nachteile auf. Bei diesen bekannten Vorrichtungen sind für unterschiedlich große Wickeldorne bzw. für Wickeldorne unterschiedlichen Durchmessers jeweils spezielle Werkzeugkomponenten erforderlich. Damit sind hohe Werkzeugkosten und Umrüstkosten sowie nachteilhaft lange Umrüstzeiten verbunden. Zum Ziehen des Wickeldornes aus dem Wickelprodukt sind relativ große Kräfte erforderlich. Bei den bekannten Ziehvorrichtungen resultieren außerdem beim Ziehen des Wickeldornes häufig Zwänge bzw. Störungen, die zu Qualitätsbeeinträchtigungen des Wickelproduktes führen - bis hin zur Zerstörung des Wickelproduktes. Daher sind die bekannten Ziehvorrichtungen verbesserungsbedürftig.

Der Erfindung liegt das technische Problem zugrunde, eine Ziehvorrichtung der eingangs genannten Art anzugeben, die sich im Hinblick auf unterschiedlich große Wickeldorne durch Flexibilität und Variabilität auszeichnet und die zudem ein zügiges, zwangloses, wenig aufwendiges und funktionssicheres Ziehen des Wickeldornes gewährleistet und zwar ohne Beeinträchtigungen der Qualität des Wickelproduktes.

Zur Lösung dieses technischen Problems lehrt die Erfindung eine Ziehvorrichtung zum Ziehen eines Wickeldornes aus einem auf dem Wickeldorn aufgewickelten Wickelprodukt,
wobei eine Aufnahmeeinrichtung zur Aufnahme des Aggregates aus Wickeldorn und Wickelprodukt vorgesehen ist, wobei ein Ziehschlitten mit einer Fixierungseinrichtung zur Fixierung des Stirnendes des Wickeldornes vorhanden ist,
wobei zumindest zwei Abschiebebacken vorgesehen sind, die im Bereich des an der Fixierungseinrichtung fixierten Stirnendes des Wickeldornes an den Wickeldorn oder an das auf dem Wickeldorn befindliche Wickelprodukt anfahrbar sind,
wobei bei angefahrenen Abschiebebacken der Wickeldorn mittels des Ziehschlittens aus dem Wickelprodukt herausziehbar ist, wobei die angefahrenen Abschiebebacken das Wickelprodukt bezüglich einer Mitbewegung mit dem Wickeldorn zurückhalten
und wobei zumindest ein Teil der Abschiebebacken jeweils ein Backensegment aufweist, welches Backensegment aus der zugeordneten Abschiebebacke ausfahrbar und an den Wickeldorn bzw. an das Wickelprodukt anfahrbar ist und wobei die Anlagefläche des Backensegmentes geringer ist als die Anlagefläche der zugeordneten Abschiebebacke.

Es liegt im Rahmen der Erfindung, dass das Wickelprodukt formschlüssig auf die Außenoberfläche des Wickeldornes aufgewickelt ist. Bei dem Wickelprodukt handelt es sich vorzugsweise um aufgewickelte Fäden bzw. Faserstränge und insbesondere um mit Harz bzw. Kunstharz imprägnierte Fäden bzw. Faserstränge. Zweckmäßigerweise wird das Wickelprodukt im ausgehärteten Zustand in die erfindungsgemäße Ziehvorrichtung eingebracht. Der Wickeldorn ist vorzugsweise im Querschnitt rund bzw. kreisförmig ausgebildet. Empfohlenermaßen ist der Wickeldorn zylinderförmig und/oder zumindest bereichsweise konisch ausgestaltet. Grundsätzlich kann der Wickeldorn aber auch im Querschnitt mehreckig, insbesondere rechteckig ausgebildet sein. Der Wickeldorn besteht normalerweise aus Metall, insbesondere aus Stahl.

Es liegt im Rahmen der Erfindung, dass das Wickelprodukt zunächst in einer Wickelvorrichtung auf den Wickeldorn aufgewickelt wird. Anschließend lässt man das Wickelprodukt gegebenenfalls aushärten. Danach wird das Aggregat aus Wickeldorn mit aufgewickeltem Wickelprodukt in die erfindungsgemäße Ziehvorrichtung bzw. in die Aufnahmeeinrichtung der Ziehvorrichtung überführt. Dann erfolgt zweckmäßigerweise das Ziehen des Domes. Vorzugsweise wird der gezogene Dom wieder in die Wickelvorrichtung zum Aufwickeln eines weiteren Wickelproduktes zurückgeführt.

Nach einer sehr bevorzugten Ausführungsform der Erfindung weist die Aufnahmeeinrichtung zumindest zwei Aufnahmestützen zur Auflage des Aggregates aus Wickeldorn und Wickelprodukt auf. Empfohlenermaßen sind die Aufnahmestützen in Längsrichtung des aufgenommenen Wickeldornes und/oder in vertikaler Richtung zur Höhenverstellung der Auflageflächen der Aufnahmestützen servomotorisch verschiebbar. Es liegt im Rahmen der Erfindung, dass die Längsachse des Wickeldornes bei Auflage des Aggregates auf den Aufnahmestützen horizontal bzw. im Wesentlichen horizontal orientiert ist. Zweckmäßigerweise sind die Aufnahmestützen im Querschnitt V-förmig ausgestaltet und das Aggregat aus Wickeldorn und Wickelprodukt wird zwischen den V-Schenkeln der Aufnahmestützen aufgenommen. Die V-Schenkel der Aufnahmestützen können beispielsweise durch Rollen oder durch fixierte Auflageprismen gebildet werden. Die Höhenverstellung der Aufnahmestützen bzw. der Auflageflächen erfolgt zur Anpassung an verschiedene Durchmesser des Aggregates bzw. des Wickeldornes. Eine Verschiebung der Aufnahmestützen in Länsrichtung des aufgenommenen Wickeldornes ist insbesondere dann zweckmäßig, wenn der Wickeldorn länger ist als das auf dem Wickeldorn aufgewickelte Wickelprodukt. Dann wird vorzugsweise beim Ziehen des Wickeldornes zumindest eine Aufnahmestütze - auf der bislang lediglich ein aus dem Wickelprodukt herausragender Abschnitt des Wickeldornes auflag - in Ziehrichtung des Wickeldornes nachgeführt, sodass das von dem Wickeldorn befreite Wickelprodukt anschließend auf dieser Aufnahmestütze aufliegt.

Nach einer besonders bevorzugten Ausführungsform der Erfindung ist die Fixierungseinrichtung kugelkardanisch in dem Ziehschlitten aufgehängt. Vorzugsweise ist die Fixierungseinrichtung eine Ziehklaue und diese Ziehklaue ist kugelkardanisch in dem Ziehschlitten aufgehängt. Die kugelkardanische Aufhängung hat sich im Hinblick auf eine sehr gleichmäßige Krafteinleitung in den Wickeldorn besonders bewährt. Ziehklaue meint im Rahmen der Erfindung ein Aufnahmeelement mit einer Aufnahmeöffnung für die Aufnahme eines Kupplungselementes des Wickeldornes. Es liegt im Rahmen der Erfindung, dass der Ziehschlitten mit der Fixierungseinrichtung bzw. Ziehklaue in Längsrichtung des Wickeldornes horizontal bzw. im Wesentlichen horizontal verfahrbar ist.

Es empfiehlt sich, dass ein aus der Stirnfläche des Wickeldornes herausragender Dornzapfen an der Fixierungseinrichtung bzw. an der Ziehklaue fixiert wird. Zweckmäßigerweise hat dieser Dornzapfen einen geringeren bzw. deutlich geringeren Durchmesser als der Wickeldorn. Grundsätzlich kann der Dornzapfen aber auch den gleichen Durchmesser aufweisen wie der Wickeldorn oder einen größeren Durchmesser aufweisen als der Wickeldorn. Es liegt im Rahmen der Erfindung, dass der Dornzapfen auf der Längsachse des Wickeldornes angeordnet ist.

Gemäß einer bevorzugten Ausführungsform der Erfindung sind die Abschiebebacken an einem Abschieberahmen angeordnet bzw. befestigt, wobei der Abschieberahmen eine Abschiebeöffnung aufweist und durch diese Abschiebeöffnung wird der Wickeldorn mittels des Ziehschlittens aus dem Wickelprodukt gezogen. Vorzugsweise kann die Ziehklaue des Ziehschlittens die Abschiebeöffnung für die Fixierung des Wickeldornes durchgreifen. Zweckmäßigerweise sind die Abschiebebacken in Richtung der Mitte der Abschiebeöffnung an den Wickeldorn bzw. an das Wickelprodukt anfahrbar. Empfohlenermaßen ist die Abschiebeöffnung zentral bzw. im Wesentlichen zentral in dem Abschieberahmen angeordnet. Vorzugsweise ist der Abschieberahmen allseitig geschlossen ausgebildet bzw. im Wesentlichen allseitig geschlossen ausgebildet. Es empfiehlt sich, dass der Abschieberahmen insbesondere oben bzw. an seiner Oberseite geschlossen ausgebildet ist. Auf diese Weise wird eine sehr stabile und verwindungssteife Vorrichtung realisiert.

Es liegt im Rahmen der Erfindung, dass die Abschiebebacken in radialer Richtung zum Wickeldorn hin bewegt werden und auf diese Weise an den Wickeldorn bzw. an das Wickelprodukt anfahrbar sind. Nach einer Ausführungsform der Erfindung werden die Abschiebebacken an einen Wickeldornabschnitt angefahren, der nicht von dem Wickelprodukt bedeckt ist. Dabei können die Abschiebebacken im angefahrenen Zustand unmittelbaren Kontakt mit der Wickeldornoberfläche haben oder mit geringfügigem Abstand zur Wickeldornoberfläche angeordnet sein. Es liegt im Rahmen der Erfindung, dass die Abschiebebacken bei dieser Ausführungsform im angefahrenen Zustand so angeordnet sind, dass sich beim Ziehen des Wickeldornes der Rand des Wickelproduktes an den Abschiebebacken abstützen kann, sodass der Wickeldorn relativ zu den Abschiebebacken bewegbar ist. Nach einer anderen Ausführungsform werden die Abschiebebacken im Bereich des an der Fixierungseinrichtung fixierten Stirnendes des Wickeldornes an das auf dem Wickeldorn angeordnete Wickelprodukt angefahren. Zweckmäßigerweise ist in diesem Bereich der angefahrenen Abschiebebacken lediglich eine dünne Wickelschicht auf dem Wickeldorn vorhanden. Die Abschiebebacken werden mit der Maßgabe an das Wickelprodukt angefahren, dass der Wickeldorn mittels des Ziehschlittens aus dem Wickelprodukt ziehbar ist und somit eine Ziehbewegung des Wickeldornes relativ zu dem Wickelprodukt stattfinden kann.

Eine Ausführungsform der Erfindung ist dadurch gekennzeichnet, dass sich die Abschiebebacken beim Ziehen des Wickeldornes an einer radialen Verdickung des Wickelproduktes abstützen. Diese radiale Verdickung kann gezielt beim Wickelvorgang erzeugt werden. Es handelt sich dabei gleichsam um einen Abstützring, der zweckmäßigerweise über den Umfang des Wickelproduktes umläuft.

Es liegt im Rahmen der Erfindung, dass zumindest zwei Abschiebebacken vorgesehen sind, die an den Wickeldorn oder an das auf dem Wickeldorn befindliche Wickelprodukt anfahrbar sind. Vorzugsweise sind die Abschiebebacken teleskopartig ausfahrbar bzw. an den Wickeldorn/an das Wickelprodukt anfahrbar. Wenn lediglich zwei Abschiebebacken vorhanden sind, werden diese zweckmäßigerweise von gegenüberliegenden Seiten des Wickeldornes radial angefahren. - Eine besonders bevorzugte Ausführungsform der Erfindung ist dadurch gekennzeichnet, dass zumindest drei, vorzugsweise zumindest vier und sehr bevorzugt vier Abschiebebacken vorgesehen sind. Es liegt im Rahmen der Erfindung, dass die Abschiebebacken über den Umfang des Wickeldornes bzw. über den Umfang der Abschiebeöffnung des Abschieberahmens verteilt angeordnet sind. Empfohlenermaßen haben die Abschiebebacken dabei gleiche Abstände bzw. Winkelabstände voneinander. Zweckmäßigerweise werden die Abschiebebacken beim Anfahren in radialer Richtung auf den Wickeldorn bzw. auf das Wickelprodukt mit gleicher Geschwindigkeit bewegt. Besonders bewährt hat sich eine Ausführungsform mit vier Abschiebebacken, die bevorzugt gleiche Abstände bzw. Winkelabstände voneinander haben.

Nach bevorzugter Ausführungsform der Erfindung weisen die Abschiebebacken jeweils eine konkav ausgebildete Anlagefläche für die Anlage an dem Wickeldorn bzw. an dem Wickelprodukt auf. Zweckmäßigerweise ist die Anlagefläche der Abschiebebacken bezüglich der Umfangsrichtung des Wickeldornes konkav ausgebildet. Die Abschiebebacken weisen also gleichsam eine Anlagemulde für den Wickeldorn bzw. für das auf dem Wickeldorn aufgewickelte Wickelprodukt auf. Bei dieser Ausführungsform wird eine formschlüssige bzw. im Wesentlichen formschlüssige Anlage insbesondere an im Querschnitt runden bzw. kreisförmigen und vor allem an zylinderförmigen Wickeldornen bzw. Wickelprodukten erreicht. Wie oben bereits dargelegt, meint Anlage im Rahmen der Erfindung einerseits den unmittelbaren Kontakt der Abschiebebacken mit dem Wickeldorn bzw. mit dem Wickelprodukt. Andererseits können die Abschiebebacken aber auch mit Abstand bzw. mit geringem Abstand zu dem Wickeldorn bzw. zu dem Wickelprodukt mit der Maßgabe angeordnet sein, dass sich das Wickelprodukt beim Ziehen des Wickeldornes an den Abschiebebacken abstützen kann, sodass der Wickeldorn relativ zum Wickelprodukt bewegt bzw. gezogen werden kann.

Es versteht sich, dass das Ausmaß des Ausfahrens der Abschiebebacken von dem Durchmesser des Wickeldornes bzw. Wickelproduktes abhängt. Bei geringem und vor allem bei sehr geringem Durchmesser des Wickeldornes bzw. Wickelproduktes können sich die Abschiebebacken beim Anfahren bzw. bei Annäherung an den Wickeldorn gegenseitig behindern, insbesondere wenn zumindest drei bzw. zumindest vier und bevorzugt vier Abschiebebacken radial angefahren werden. Erfindungsgemäß weist zumindest ein Teil der Abschiebebacken jeweils ein Backensegment aufweist, welches Backensegment aus der zugeordneten Abschiebebacke ausfahrbar und an dem Wickeldorn bzw. an das Wickelprodukt anfahrbar ist. Dabei ist die Anlagefläche des Backensegmentes geringer ist als die Anlagefläche der zugeordneten Abschiebebacke. Zweckmäßigerweise ist ein Backensegment relativ zur zugeordneten Abschiebebacke ausfahrbar, ohne dass die Abschiebebacke eine Anfahrbewegung vollzieht. Vorzugsweise sind die Backensegmente teleskopartig ausfahrbar. Nach besonders empfohlener Ausführungsform der Erfindung weisen alle Abschiebebacken jeweils ein Backensegment auf. Bei geringem Durchmesser des Wickeldornes bzw. Wickelproduktes, kann zumindest ein Teil der Backensegmente anstelle der gesamten voluminöseren Abschiebebacken an den Wickeldorn bzw. an das Wickelprodukt angefahren werden.

Empfohlenermaßen ist die Anlagefläche eines Backensegmentes zumindest 50 %, vorzugsweise zumindest 60 % geringer als die gesamte Anlagefläche der zugeordneten Abschiebebacke. Gesamte Anlagefläche der Abschiebebacke meint hier die Anlagefläche im eingefahrenen Zustand des Backensegmentes und umfasst somit auch die Anlagefläche des Backensegmentes. Es empfiehlt sich, dass die Anlagefläche der Backensegmente jeweils konkav ausgebildet ist. Es liegt im Rahmen der Erfindung, dass die Anlagefläche der Backensegmente in Bezug auf die Umfangsrichtung des Wickeldornes konkav ausgebildet ist. Vorzugsweise fluchtet die konkave Anlagefläche eines Backensegmentes im eingefahrenen Zustand des Backensegmentes mit der konkaven Anlagefläche der übrigen Abschiebebacke. Vorteilhafterweise ist ein Backensegment - insbesondere bezüglich der Umfangsrichtung des Wickeldornes - mittig in der zugeordneten Abschiebebacke angeordnet.

Nach einer sehr bevorzugten Ausführungsform der Erfindung werden - insbesondere bei geringem Durchmesser von Wickeldorn bzw. Wickelprodukt - lediglich zwei Backensegmente aus einander gegenüberliegenden Abschiebebacken angefahren bzw. an den Wickeldorn oder an das Wickelprodukt angefahren. Im Rahmen dieser Ausführungsvariante kann auch bei sehr geringen Wickeldorndurchmessern bzw. Wickelproduktdurchmessern der Wickeldorn funktionssicher aus dem Wickelprodukt gezogen werden.

Der Erfindung liegt die Erkenntnis zugrunde, dass mit der erfindungsgemäßen Ziehvorrichtung ein einfaches, zügiges und funktionssicheres Ziehen eines Wickeldornes aus einem Wickelprodukt möglich ist. Für unterschiedlich große Wickeldorne bzw. für Wickeldorne unterschiedlichen Durchmessers kann im Rahmen der Erfindung dasselbe Werkzeug bzw. können im Rahmen der Erfindung dieselben Werkzeugkomponenten eingesetzt werden. Von daher zeichnet sich die erfindungsgemäße Ziehvorrichtung im Vergleich zu den aus der Praxis bekannten Ziehvorrichtungen durch hohe Flexibilität und Variabilität aus. Nachteilhaft hohe Umrüstkosten und nachteilhaft lange Umrüstzeiten können vermieden werden. Mit der erfindungsgemäßen Ziehvorrichtung können im Übrigen Zwänge, die zu Qualitätsbeeinträchtigungen des Wickelproduktes führen, vollständig vermieden werden. Nach dem Ziehen des Wickeldornes verbleiben in qualitätsmäßiger Hinsicht einwandfreie Wickelprodukte. Die erfindungsgemäße Ziehvorrichtung ist nichtsdestoweniger relativ einfach und wenig komplex aufgebaut und lässt sich verhältnismäßig kostengünstig realisieren.

Nachfolgend wird die Erfindung anhand einer lediglich ein Ausführungsbeispiel darstellenden Zeichnung näher erläutert. Es zeigen in schematischer Darstellung:
- Figur 1: eine perspektivische Gesamtansicht der erfindungsgemäßen Zieh- vorrichtung in einer ersten Funktionsstellung,
- Figur 2: den Gegenstand nach Figur 1 in einer zweiten Funktionsstellung,
- Figur 3: den Gegenstand gemäß Figur 1 in einer dritten Funktionsstellung,

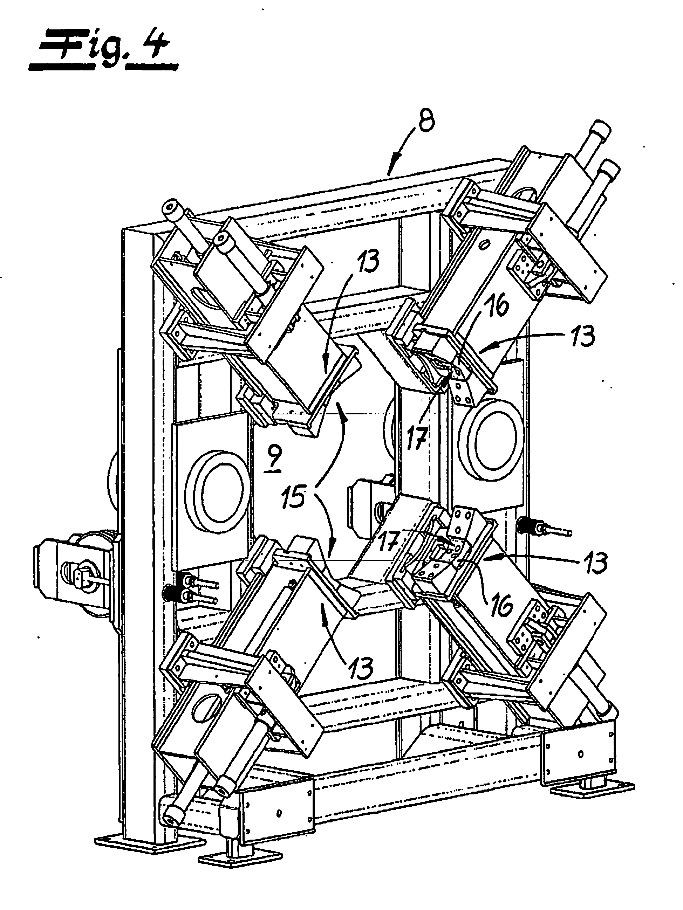

- Figur 4: ausschnittsweise eine perspektivische Ansicht auf den Abschiebe- rahmen der erfindungsgemäßen Ziehvorrichtung mit Abschiebe- backen,
- Figur 5: eine perspektivische Ansicht eines Ziehschlittens,
- Figur 6: eine Ansicht eines Abschieberahmens mit an den Wickeldorn angefahrenen Abschiebebacken,
- Figur 7: den Gegenstand nach Figur 6 mit einem Wickeldorn geringeren Durchmessers und
- Figur 8: den Gegenstand gemäß Figur 6 mit einem Wickeldorn mit sehr geringem Durchmesser.

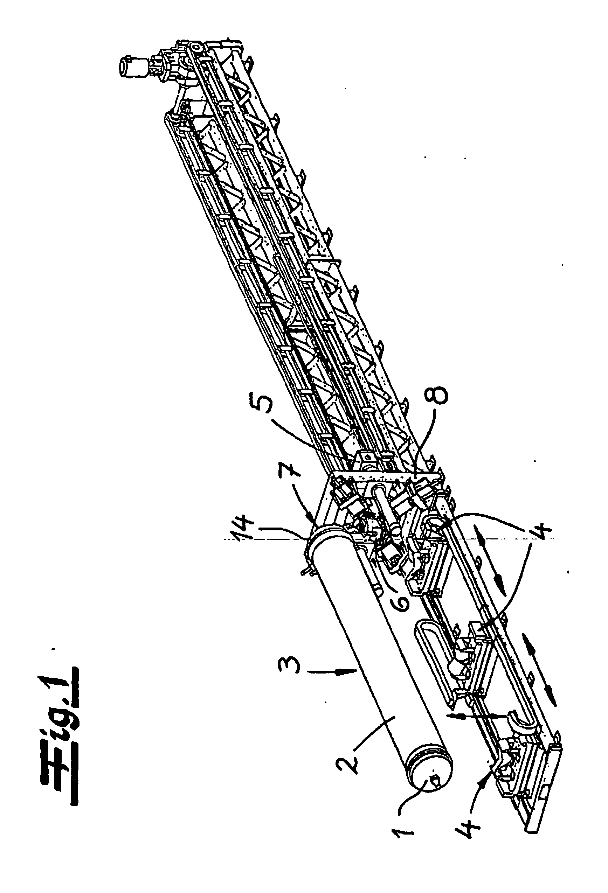

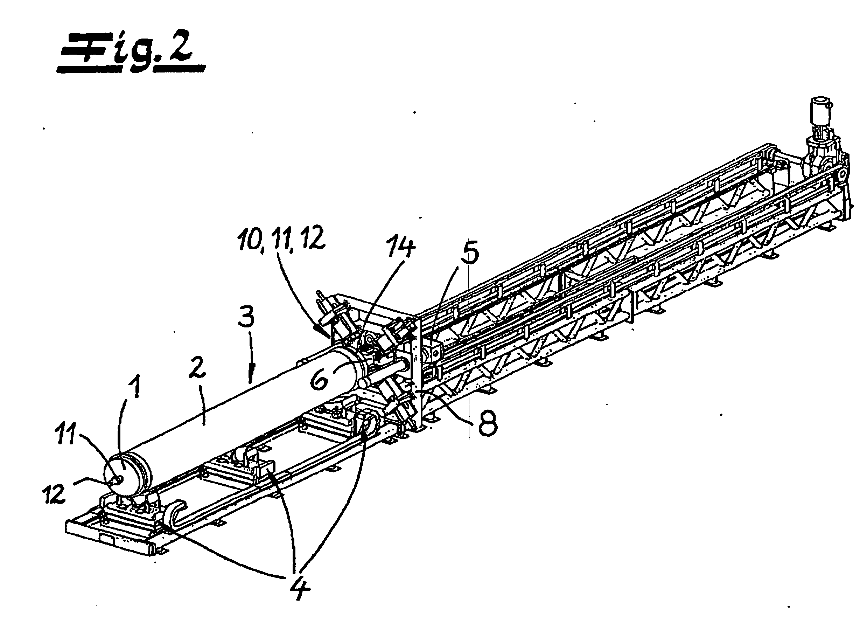

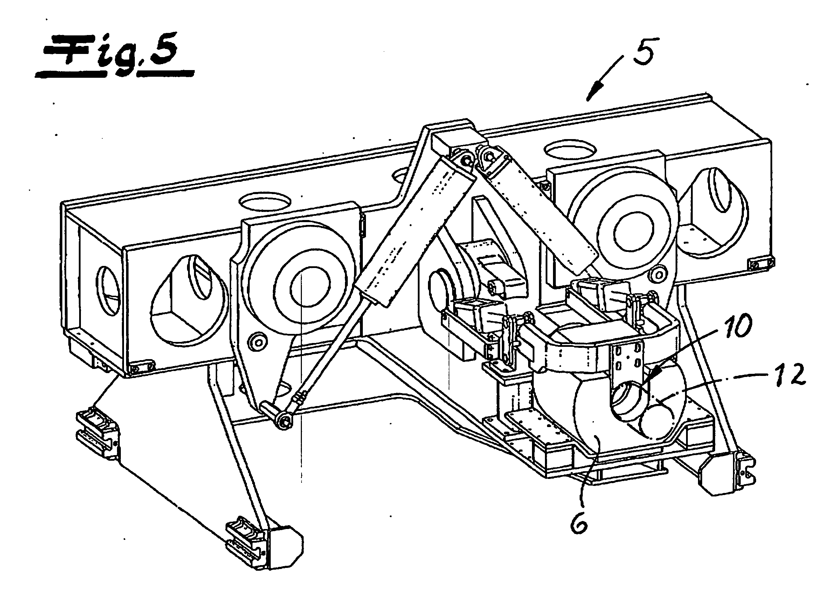

Die Figuren zeigen eine erfindungsgemäße Ziehvorrichtung zum Ziehen eines Wickeldornes 1 aus einem auf den Wickeldorn 1 aufgewickelten Wickelprodukt 2. Im Ausführungsbeispiel ist sowohl der Wickeldorn 1 als auch das Wickelprodukt 2 zylinderförmig ausgebildet. Das Wickelprodukt 2 mag aus aufgewickelten imprägnierten Fasersträngen bestehen. - In einer nicht dargestellten Wickelvorrichtung wird zunächst das Wickelprodukt 2 auf den Wickeldorn 1 aufgewickelt. Danach wird das Aggregat 3 aus Wickeldorn 1 und aufgewickeltem Wickelprodukt 2 zu der erfindungsgemäßen Ziehvorrichtung überführt (siehe insbesondere Figur 1). Die Ziehvorrichtung weist eine Aufnahmeeinrichtung zur Aufnahme des Aggregates 3 aus Wickeldorn 1 und Wickelprodukt 2 auf, die vorzugsweise und im Ausführungsbeispiel von drei Aufnahmestützen 4 gebildet wird. Diese Aufnahmestützen 4 sind empfohlenermaßen und im Ausführungsbeispiel in Längsrichtung des Wickeldornes 1 und in vertikaler Richtung zur Höhenverstellung der Auflagefläche der Aufnahmestützen 4 servomotorisch verschiebbar. Das wird in Figur 1 durch entsprechende Pfeile angedeutet. Die Ziehvorrichtung ist weiterhin mit einem Ziehschlitten 5 ausgestattet, der eine Ziehklaue 6 als Fixierungseinrichtung zur Fixierung des Stirnendes 7 des Wickeldornes 1 aufweist. In den Figuren 1 und 2 ist erkennbar, dass der Ziehschlitten 5 hinter einem Abschieberahmen 8 angeordnet ist und dass die Ziehklaue 6 durch eine zentrale Abschiebeöffnung 9 in den Bereich vor dem Abschieberahmen 8 ragt. Die Ziehklaue 6 weist eine Aufnahme 10 auf, in der ein Kupplungselement 11 des Wickeldornes 1 mit der Maßgabe einlegbar ist, dass der Wickeldorn 1 von der Ziehklaue 6 in Längsrichtung des Wickeldornes 1 gezogen werden kann. Der Ziehschlitten ist im Übrigen in der Figur 5 detailliert dargestellt.

In der Figur 2 ist der Funktionszustand gezeigt, in dem das Aggregat 3 aus Wickeldorn 1 und Wickelprodukt 2 auf den Aufnahmestützen 4 aufgelegt ist und das Kupplungselement 11 des Wickeldornes 1 in die Aufnahme 10 der Ziehklaue 6 eingelegt ist. Das Kupplungselement 11 des Wickeldornes 1 ist im Übrigen an einem Dornzapfen 12 vorgesehen, der aus der Stirnfläche des Wickeldornes 1 herausragt. Es ist erkennbar, dass der Durchmesser des Domzapfens 12 deutlich geringer ist als der Durchmesser des Wickeldornes 1.

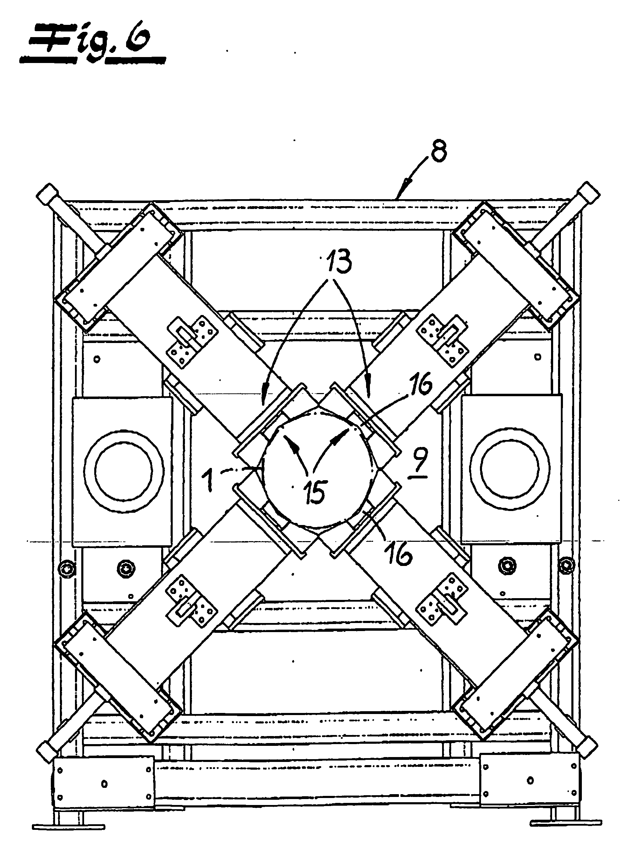

Im Ausführungsbeispiel sind an dem Abschieberahmen 8 vier Abschiebebacken 13 vorgesehen, die radial in Richtung zum Wickeldorn 1 bewegbar sind bzw. an den Wickeldorn 1 anfahrbar sind. Das Aggregat 3 aus Wickeldorn 1 und Wickelprodukt 2 wird mit Hilfe des Ziehschlittens 5 zunächst in Richtung Abschieberahmen 8 gezogen, bis ein wickelproduktfreier zylinderförmiger Abschnitt 14 auf Höhe der Abschiebebacken 13 angeordnet ist. Anschließend werden die Abschiebebacken 13 radial an den Wickeldorn 1 bzw. an den wickelproduktfreien Abschnitt 14 des Wickeldornes 1 angefahren. Dieser angefahrene Zustand der Abschiebebacken 13 ist insbesondere in der Figur 6 deutlich erkennbar. Die Abschiebebacken 13 sind vorzugsweise und im Ausführungsbeispiel mit gleichen Abständen voneinander über den Umfang des Wickeldornes 1 verteilt angeordnet. Zweckmäßigerweise und im Ausführungsbeispiel weisen die Abschiebebacken 13 jeweils eine bezüglich der Umfangsrichtung des Wickeldornes 1 konkave Anlagefläche 15 auf. Damit lässt sich eine besonders formschlüssige Anlage der Abschiebebacken 13 an dem Wickeldorn 1 erreichen (Figur 6).

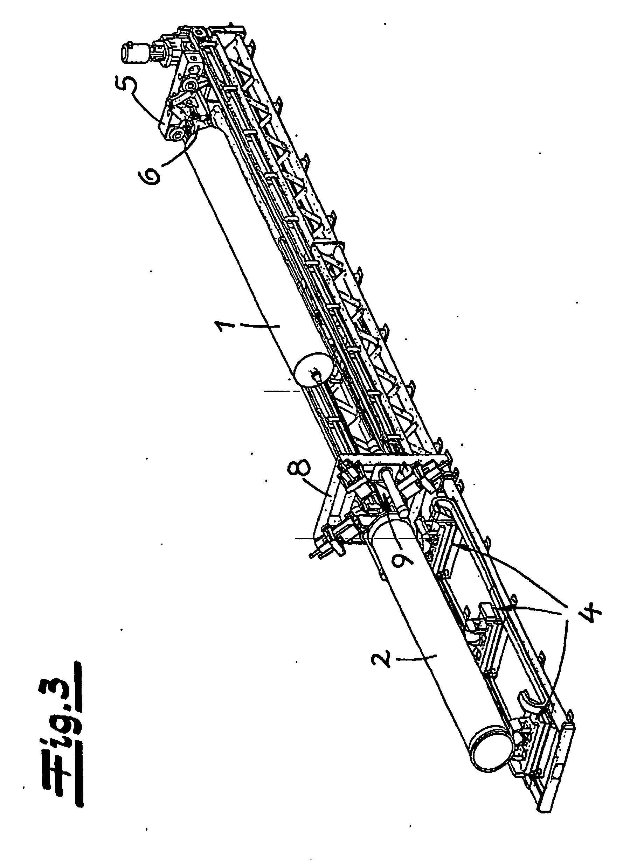

Nach dem Anfahren der Abschiebebacken 13 an den Wickeldorn 1 bzw. an den Abschnitt 14 des Wickeldornes 1 fährt der Ziehschlitten 5 von dem Abschieberahmen 8 weg und zieht den Wickeldorn 1 aus dem Wickelprodukt 2. Dabei stützt sich das Wickelprodukt 2 an den angefahrenen Abschiebebacken 13 ab, sodass der Wickeldorn 1 relativ zum Wickelprodukt 2 bewegbar ist. Das Wickelprodukt 2 kann an seinem abschieberahmenseitigen Ende eine nicht dargestellte radiale Verdickung aufweisen, die über den Umfang des Wickelproduktes 2 umläuft. Eine solche radiale Verdickung bzw. ein solcher Abstützring bedingt eine besonders funktionssichere Abstützung des Wickelproduktes 2 an den Abschiebebacken 13. In Figur 3 ist im Übrigen der Funktionszustand dargestellt, in dem der Wickeldorn 1 bereits aus dem Wickelprodukt 2 herausgezogen ist. Dieser Wickeldorn 1 kann dann wieder einer Wickelvorrichtung zum erneuten Aufwickeln eines Wickelproduktes 2 zugeführt werden.

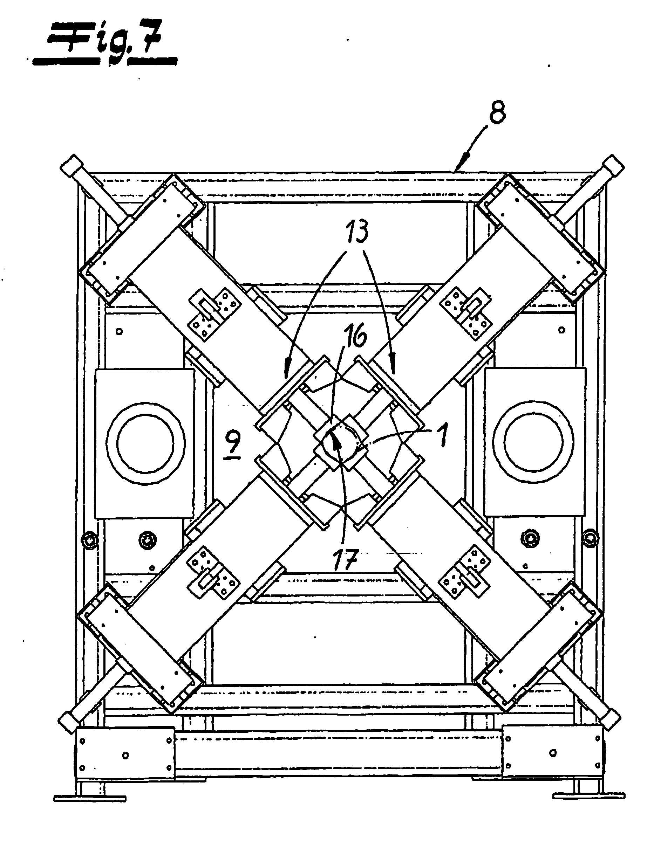

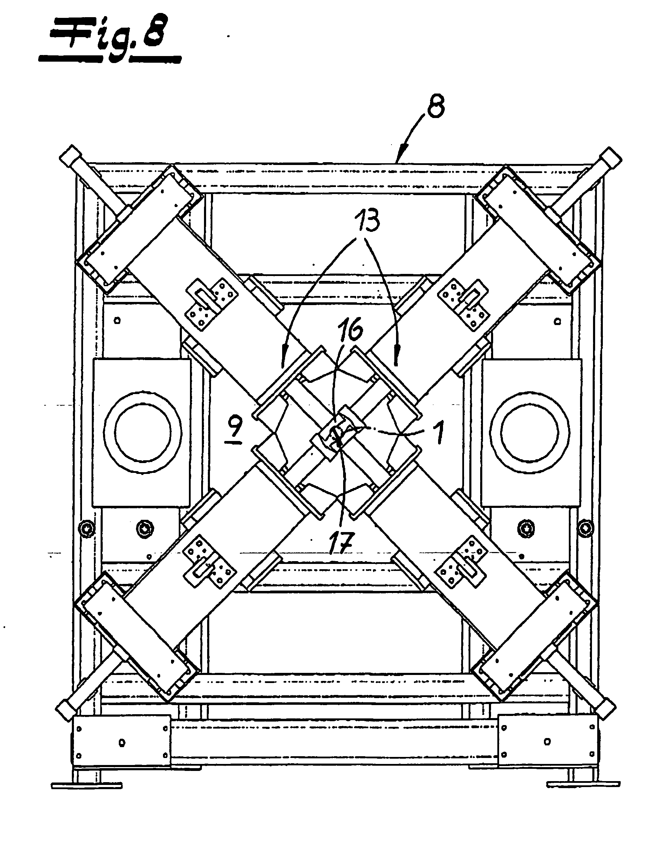

Erfindungsgemäß weisen die Abschiebebacken 13 jeweils ein Backensegment 16 auf, das aus der zugeordneten Abschiebebacke 13 ausfahrbar und an den Wickeldorn 1 anfahrbar ist. Die Anlagefläche 17 eines Backensegmentes 16 ist dabei geringer als die gesamte Anlagefläche 15 der zugeordneten Abschiebebacke 13. Im Ausführungsbeispiel beträgt die Anlagefläche 17 der Backensegmente 16 etwa ein Drittel bzw. etwas weniger als ein Drittel der gesamten Anlagefläche 15 der jeweils zugeordneten Abschiebebacke 13. Die Backensegmente 16 werden insbesondere bei geringerem Durchmesser des Wickeldornes 1 ausgefahren, wenn sich nämlich die gesamten Abschiebebacken 13 beim weiteren Anfahren auf den Wickeldorn 1 gegenseitig behindern würden (Figuren 7 und 8). Dann werden lediglich die Backensegmente 16 an den Wickeldorn 1 angefahren. In dem in Figur 7 dargestellten Beispiel sind alle vier Backensegmente 16 an einen Wickeldorn 1 geringen Durchmessers angefahren. Im Beispiel gemäß Figur 8 ist ein Wickeldorn 1 mit sehr geringem Durchmesser gezeigt. Hier würden sich auch die Backensegmente 16 beim Anfahren behindern, wenn alle vier Backensegmente 16 angefahren würden. In Figur 8 sind lediglich zwei gegenüberliegende Backensegmente 16 an den Wickeldorn 1 geringen Durchmessers angefahren. Vorzugsweise und im Ausführungsbeispiel weisen die Backensegmente 16 ebenfalls eine bezüglich der Umfangsrichtung des Wickeldornes 1 konkave Anlagefläche 17 auf. Zweckmäßigerweise und im Ausführungsbeispiel fluchtet die konkave Anlagefläche 17 eines Backensegmentes 16 im eingefahrenen Zustand mit der konkaven Anlagefläche 15 der übrigen Abschiebebacke 13 (siehe insbesondere Figur 6). In den Figuren ist weiterhin erkennbar, dass ein Backensegment 16 bevorzugt und im Ausführungsbeispiel mittig in der Anlagefläche 15 einer Abschiebebacke 13 angeordnet ist.

## Patentansprüche

1. Ziehvorrichtung zum Ziehen eines Wickeldornes (1) aus einem auf dem Wickeldorn (1) aufgewickelten Wickelprodukt (2), wobei eine Aufnahmeeinrichtung zur Aufnahme des Aggregates (3) aus Wickeldorn (1) und Wickelprodukt (2) vorgesehen ist, wobei ein Ziehschlitten (5) mit einer Fixierungseinrichtung zur Fixierung des Stirnendes (7) des Wickeldornes (1) vorhanden ist,
wobei zumindest zwei Abschiebebacken (13) vorgesehen sind, die im Bereich des an der Fixierungseinrichtung fixierten Stirnendes (7) des Wickeldornes (1) an den Wickeldorn (1) oder an das auf dem Wickeldorn (1) befindliche Wickelprodukt (2) anfahrbar sind,
wobei bei angefahrenen Abschiebebacken (13) der Wickeldorn (1) mittels des Ziehschlittens (5) aus dem Wickelprodukt (2) herausziehbar ist, wobei die angefahrenen Abschiebebacken (13) das Wickelprodukt (2) bezüglich einer Mitbewegung mit dem Wickeldorn (1) zurückhalten, **dadurch gekennzeichnet, dass** zumindest ein Teil der Abschiebebacken (13) jeweils ein Backensegment (16) aufweist, welches Backensegment (16) aus der zugeordneten Abschiebebacke (13) ausfahrbar und an den Wickeldorn (1) bzw. an das Wickelprodukt (2) anfahrbar ist und wobei die Anlagefläche (17) des Backensegmentes (16) geringer ist als die Anlagefläche (15) der zugeordneten Abschiebebacke (13).

2. Ziehvorrichtung nach Anspruch 1, wobei die Aufnahmeeinrichtung zumindest zwei Aufnahmestützen (4) zur Auflage des Aggregates (3) aus Wickeldorn (1) und Wickelprodukt (2) aufweist und wobei die Aufnahmestützen (4) in Längsrichtung des aufgenommenen Wickeldornes (1) und/oder in vertikaler Richtung zur Höhenverstellung der Auflagefläche der Aufnahmestützen (4) servomotorisch verschiebbar sind.

3. Ziehvorrichtung nach einem der Ansprüche 1 oder 2, wobei die Fixierungseinrichtung eine Ziehklaue (6) ist und wobei die Ziehklaue (6) kugelkardanisch in dem Ziehschlitten (5) aufgehängt ist.

4. Ziehvorrichtung nach einem der Ansprüche 1 bis 3, wobei ein aus der Stirnfläche des Wickeldornes (1) herausragender Dornzapfen (12) an der Fixierungseinrichtung bzw. Ziehklaue (6) fixierbar ist.

5. Ziehvorrichtung nach einem der Ansprüche 1 bis 4, wobei die Abschiebebacken (13) an einem Abschieberahmen (8) angeordnet sind, wobei der Abschieberahmen (8) eine Abschiebeöffnung (9) aufweist, durch welche Abschiebeöffnung (9) der Wickeldorn (1) mittels des Ziehschlittens (5) ziehbar ist.

6. Ziehvorrichtung nach einem der Ansprüche 1 bis 5, wobei der Abschieberahmen (8) allseitig geschlossen bzw. im Wesentlichen allseitig geschlossen ausgebildet ist.

7. Ziehvorrichtung nach einem der Ansprüche 1 bis 6, wobei zumindest drei, vorzugsweise zumindest vier und bevorzugt vier Abschiebebacken (13) vorgesehen sind.

8. Ziehvorrichtung nach einem der Ansprüche 1 bis 7, wobei die Abschiebebacken (13) eine konkav ausgebildete Anlagefläche (15) für die Anlage an dem Wickeldorn (1) bzw. an dem Wickelprodukt (2) aufweisen.

9. Ziehvorrichtung nach einem der Ansprüche 1 bis 8, wobei die Anlagefläche (17) eines Backensegmentes (16) zumindest 50 % geringer ist als die gesamte Anlagefläche (15) der zugeordneten Abschiebebacke (13).

10. Ziehvorrichtung nach einem der Ansprüche 1 oder 9, wobei die Anlagefläche (17) der Backensegmente (16) konkav ausgebildet ist.

11. Ziehvorrichtung nach einem der Ansprüche 1 bis 10, wobei ein Backensegment (16) - insbesondere bezüglich der Umfangsrichtung des Wickeldornes (1) - mittig in der zugeordneten Abschiebebacke (13) angeordnet ist.

12. Ziehvorrichtung nach einem der Ansprüche 1 bis 11, wobei - insbesondere bei geringem Durchmesser von Wickeldorn bzw. Wickelprodukt - lediglich zwei Backensegmente (16) aus einander gegenüberliegenden Abschiebebacken (13) an den Wickeldorn (1) bzw. an das Wickelprodukt (2) anfahrbar sind.

## Claims

1. A pulling apparatus for pulling a winding mandrel (1) out of a coiled product (2) coiled on the winding mandrel (1), wherein a receiving device is provided for receiving the unit (3) comprising winding mandrel (1) and coiled product (2), wherein a pulling carriage (5) having a fixing device for fixing the front end (7) of the winding mandrel (1) is provided,
wherein at least two stripper jaws (13) are provided which, in the region of the front end (7) of the winding mandrel (1) fixed on the fixing device, can be made to approach the winding mandrel (1) or the coiled product (2) located on the winding mandrel (1),
wherein when the stripper jaws (13) are approached, the winding mandrel (1) can be pulled out from the coiled product (2) by means of the pulling carriage (5), wherein the approached stripper jaws (13) retain the coiled product (2) in relation to a co-movement with the winding mandrel (1), **characterised in that**
at least one portion of the stripper jaws (13) comprises a jaw segment (16) which jaw segment (16) can be extracted from the associated stripper jaw (13) and made to approach the winding mandrel (1) or the coiled product (2), and wherein the contact surface (17) of the jaw segment (16) is smaller than the contact surface (15) of the associated stripper jaw (13).

2. The pulling apparatus according to claim 1, wherein the receiving device comprises at least two receiving supports (4) for supporting the unit (3) comprising winding mandrel (1) and coiled product (2) and wherein the receiving supports (4) can be displaced by means of a servomotor in the longitudinal direction of the received winding mandrel (1) and/or in the vertical direction for height adjustment of the contact surface of the receiving supports (4).

3. The pulling apparatus according to any one of claims 1 or 2, wherein the fixing device is a pulling claw (6) and wherein the pulling claw (6) is suspended in the pulling carriage (5) in the manner of a ball-type universal joint.

4. The pulling apparatus according to any one of claims 1 to 3, wherein a winding mandrel pin (12) projecting from the front face of the winding mandrel (1) can be fixed on the fixing device or pulling claw (6).

5. The pulling apparatus according to any one of claims 1 to 4, wherein the stripper jaws (13) are disposed on a stripper frame (8), wherein the stripper frame (8) has a stripper opening (9), through which stripper opening (9) the winding mandrel (1) can be pulled by means of the pulling carriage (5).

6. The pulling apparatus according to any one of claims 1 to 5, wherein the stripper frame (8) is closed on all side or is configured to be substantially closed on all sides.

7. The pulling apparatus according to any one of claims 1 to 6, wherein at least three, preferably at least four and preferably four stripper jaws (13) are provided.

8. The pulling apparatus according to any one of claims 1 to 7, wherein the stripper jaws (13) comprise a concavely configured contact surface (15) for contact on the winding mandrel (1) or on the coiled product (2).

9. The pulling apparatus according to any one of claims 1 to 8, wherein the contact surface (17) of a jaw segment (16) is at least 50% smaller than the entire contact surface (15) of the stripper jaw (13).

10. The pulling apparatus according to any one of claims 1 to 9, wherein the contact surface (17) of the jaw segment (16) is concavely configured.

11. The pulling apparatus according to any one of claims 1 to 10, wherein a jaw segment (16) - in particular in relation to the peripheral direction of the winding mandrel (1) - is disposed centrally in the associated stripper jaw (13).

12. The pulling apparatus according to any one of claims 1 to 11, wherein - in particular when the diameter of winding mandrel or coiled product is small - merely two jaw segments (16) from mutually opposite stripper jaws (13) can be made to approach the winding mandrel (1) or the coiled product (2).

## Revendications

1. Dispositif de traction pour tirer sur un mandrin d'enroulement (1) à partir d'un produit à enrouler (2) enroulé sur le mandrin d'enroulement (1), un dispositif de logement étant prévu pour le logement de l'ensemble (3) comprenant le mandrin d'enroulement (1) et le produit à enrouler (2), un coulisseau de traction (5) avec un système de fixation étant présent pour la fixation de l'extrémité avant (7) du mandrin d'enroulement (1),
au moins deux mâchoires de dégagement (13) étant prévues, lesquelles peuvent être amenées dans la zone de l'extrémité avant (7) fixée sur le système de fixation du mandrin d'enroulement (1) sur le mandrin d'enroulement (1) ou sur le produit à enrouler (2) se trouvant sur le mandrin d'enroulement (1),
le mandrin d'enroulement (1) pouvant être enlevé au moyen du coulisseau de traction (5) du produit à enrouler (2) lorsque les mâchoires de dégagement (13) sont mises en place, les mâchoires de dégagement (13) mises en place retenant le produit à enrouler (2) par rapport à un co-déplacement avec le mandrin d'enroulement (1), **caractérisé en ce que**
au moins une partie des mâchoires de dégagement (13) présente à chaque fois un segment de mâchoire (16), lequel segment de mâchoire (16) peut être sorti de la mâchoire de dégagement (13) associée et peut être placé sur le mandrin d'enroulement (1) ou sur le produit à enrouler (2) et la surface d'application (17) du segment de mâchoire (16) étant plus faible que la surface d'application (15) de la mâchoire de dégagement (13) associée.

2. Dispositif de traction selon la revendication 1, le dispositif de logement présentant au moins deux tubulures de logement (4) pour le support de l'ensemble (3) constitué du mandrin d'enroulement (1) et du produit à enrouler (2) et les tubulures de logement (4) pouvant être déplacées par servomoteur dans le sens longitudinal du mandrin d'enroulement (1) réceptionné et/ou dans le sens vertical pour le réglage en hauteur de la surface d'appui des tubulures de logement (4).

3. Dispositif de traction selon l'une des revendications 1 ou 2, le dispositif de fixation étant une griffe de traction (6) et la griffe de traction (6) étant suspendue à la façon d'un cardan à rotule dans le coulisseau de traction (5).

4. Dispositif de traction selon l'une des revendications 1 à 3, un tenon de mandrin (12) dépassant de la surface avant du mandrin d'enroulement (1) pouvant être fixé sur le système de fixation ou la griffe de traction (6).

5. Dispositif de traction selon l'une des revendications 1 à 4, les mâchoires de dégagement (13) étant disposées sur un cadre de dégagement (8), le cadre de dégagement (8) présentant une ouverture de dégagement (9), par laquelle le mandrin d'enroulement (1) peut être tiré au moyen du coulisseau de traction (5).

6. Dispositif de traction selon l'une des revendications 1 à 5, le cadre de dégagement (8) étant fermé sur tous les côtés et étant conçu fermé pour l'essentiel sur tous les côtés.

7. Dispositif de traction selon l'une des revendications 1 à 6, au moins trois, de préférence au moins quatre et de préférence quatre mâchoires de dégagement (13) étant prévues.

8. Dispositif de traction selon l'une des revendications 1 à 7, les mâchoires de dégagement (13) présentant une surface d'application (15) conçue concave pour l'application sur le mandrin d'enroulement (1) ou sur le produit à enrouler (2).

9. Dispositif de traction selon l'une des revendications 1 à 8, la surface d'application (17) d'un segment de mâchoire (16) étant au moins 50 % plus petite que l'ensemble de la surface d'application (15) de la mâchoire de dégagement (13) associée.

10. Dispositif de traction selon l'une des revendications 1 ou 9, la surface d'application (17) des segments de mâchoire (16) étant conçue concave.

11. Dispositif de traction selon l'une des revendications 1 à 10, un segment de mâchoire (16) étant disposé au centre dans la mâchoire de dégagement (13) associée - en particulier par rapport au sens de rotation du mandrin d'enroulement (1).

12. Dispositif de traction selon l'une des revendications 1 à 11, seuls deux segments de mâchoire (16) constitués de mâchoires de dégagement (13) se faisant face pouvant être amenés sur le mandrin d'enroulement (1) ou sur le produit à enrouler (2) - en particulier avec un faible diamètre du mandrin d'enroulement ou du produit à enrouler.
